# EUROPEAN PATENT APPLICATION

(11) **EP 4 723 494 A1**
(43) Date of publication of application: **08.04.2026**
(21) Application number: 25206305.2
(22) Date of filing: 02.10.2025
(51) Int. Cl.: H04B 3/00, H04B 3/32

(54) **SECURE AUDIO DEVICE AND METHOD**

(30) Priority: 03.10.2024 EP 24204442
(71) Applicant: EPOS Group A/S, 2750 Ballerup (DK)
(72) Inventor: REINEMO, Svend, DK-2765 Smørum (DK); WAGNER, Morten, DK-2750 Ballerup (DK); YAZDANPANAH, Mehrzad, DK-2750 Ballerup (DK); CHRISTENSEN, Lars, DK-2750 Ballerup (DK)
(74) Representative: Demant

(57) **Abstract**

The disclosure inter alia pertains to an audio device (1) comprising a first audio channel (100a-i) configured to transmit a first audio signal (200) and at least one second audio channel (100a-i) configured to transmit at least one second audio signal (200). The first audio channel (100a-i) comprises a first audio cable (110) and a first noise masker (120) for generating a masking noise (300) and wherein the first noise masker (120) is configured to introduce the masking noise (300) into the first audio channel (100a-i) to mask a crosstalk level of a first crosstalk signal (410) inflicted in the first audio channel (100a-i) by one or more of the at least one second audio signal.

## Description

### FIELD

The present disclosure relates to audio devices. More particularly, the disclosure relates to devices for audio signal transmission.

### BACKGROUND

For many years it has been a challenge to reduce noise in audio signal transmission. One of the noise sources in audio signal transmission via cables is crosstalk between individual cables. A signal transmitted in one cable may hereby couple into a second cable. If the coupling is strong enough, the signal may be audible in the second cable. With respect to sound quality this crosstalk introduces undesired noise to the signal of the second cable.

Furthermore, for many years, safety requirements for audio transmission, in particular in telecommunication services, have significantly increased. At the same time, advances in technology have enabled devices that are more connected, giving rise to more possibilities for external access to data signals through insecure links in audio transmission. Crosstalk between a cable carrying a secured signal and a cable carrying an unsecured signal may couple confidential information as a crosstalk signal from the unsecured signal to the cable carrying the secured signal or vice versa. If a coupling of the cables is strong enough, the crosstalk signal may be audible. Even if the coupling is weak, enhancing the crosstalk signal may render the crosstalk signal audible. Therefore, there is a need to provide a solution that reduces crosstalk between individual cables and that keeps the crosstalk signal incomprehensible or irrecoverable even when the crosstalk signal is enhanced. The present disclosure provides at least an alternative to the prior art.

### SUMMARY

In view of this, it is an object of the present disclosure to provide an audio device providing secure communication in particular without impairing the audio quality.

According to a first aspect of the present disclosure, an exemplary audio device is provided. The audio device may comprise a first audio channel configured to transmit a first audio signal. The audio device may comprise at least one second audio channel configured to transmit at least one second audio signal. The first audio channel may comprise a first audio cable and a first noise masker for generating a masking noise. The first noise masker may be configured to introduce the masking noise into the first audio channel to mask a crosstalk level of a first crosstalk signal inflicted in the first audio channel by one or more of the at least one second audio signal.

According to a second aspect of the present disclosure, a crosstalk masking method is provided. The method may in particular be performed by the audio device of the first aspect. The method may comprise generating a masking noise with a first noise masker. The method may comprise introducing the masking noise into a first audio channel configured to transmit a first audio signal.

Embodiments of the first and second aspect of the invention may have one or more of the properties below. A disclosure of audio device embodiments that are configured to perform or comprise performing a method step thereby also disclose the corresponding method. Furthermore, a disclosure of a method step also discloses the corresponding device capable of performing the method step.

The audio device may be a headset. The headset may comprise one or more speakers, wherein each of the one or more speakers may be connected to the first audio channel or to one of the at least one second audio channels. Furthermore, the headset may comprise a microphone, capable of recording sound. For example, a headset may comprise one speaker that is connected to the first audio channel and that may be arranged on an ear of a user, when in use, and the headset may further comprise one microphone that is connected to one second audio channel and that may be arranged close to the mouth of the same user, when in use. In another example, a headset may comprise two speakers and a microphone, wherein one speaker may be connected to the first audio channel and the other speaker and the microphone may each be connected to one of the at least one second audio channel. Alternatively, the microphone may be connected to the first audio channel and one or two speakers may each be connected to a respective second audio channel.

The first audio signal and/or the at least one second audio signal may be an electrical signal. The first audio signal and/or the at least one second audio signal may be a decrypted audio signal. Furthermore, the first audio signal and/or the at least one second audio signal may comprise an intensity too low to be audible. For example, the first audio signal and/or the at least one second audio signal may comprise silent sections in which no signal is detectable. In particular, the first audio signal and/or the at least one second audio signal may be background noise or silence and thus may not be a signal that may have been created actively and purposefully but rather may be a result of a mere presence of the first audio channel or the at least one second audio channel, respectively.

As mentioned, the first audio channel may comprise a first noise masker for generating a masking noise. Further, as mentioned, the first noise masker may be configured to introduce the masking noise into the first audio channel to mask a crosstalk level of the first crosstalk signal. The first crosstalk signal may be an audio signal coupled into the first audio channel by at least one second audio signal, e.g. through electromagnetic radiation. The crosstalk level may be a maximum possible intensity of the first crosstalk signal. Alternatively, the crosstalk level may be an average intensity of the first crosstalk signal. In particular, the crosstalk level may be an estimation of a maximum possible or an average intensity of the first crosstalk signal taking into consideration the intensity of the at least one second audio signal and the coupling strength between the first audio channel and the at least one second audio channel. Alternatively, the crosstalk level may be an actual intensity of the first crosstalk signal.

The masking noise may comprise an essentially similar level as the crosstalk level, in particular less than 50% higher or lower than the crosstalk level, in particular less than 30% higher or lower than the crosstalk level, in particular less than 20% higher or lower than the crosstalk level. Alternatively, the masking noise may comprise a level at least as high as the crosstalk level and up to ten times higher than the crosstalk level, in particular up to five times higher than the crosstalk level, in particular up to twice as high as the crosstalk level. Thus, the masking noise may comprise a level with sufficient height to render the first crosstalk signal incomprehensible or irrecoverable. Thus, if a signal of the first audio channel may be recorded and enhanced, both the masking noise and the first crosstalk signal may be enhanced equally. An enhanced signal may thus comprise an enhanced masking noise which comprises a level with sufficient height to render a corresponding enhanced crosstalk signal incomprehensible or irrecoverable. For example, if the at least one second audio signal comprises confidential data and the at least one second audio channel is secured against external access, while the first audio channel is not secured against external access, crosstalk coupling of the confidential data into the first audio channel may allow undesirable external access to the confidential data. A previously described use of the masking noise in the first audio channel may allow to avoid external access to the confidential data through the first audio channel.

The first audio cable may be a balanced audio cable. In other words, the first audio cable may be a symmetrical audio cable. Therefore, the first audio cable may comprise a first signal conductor, a second signal conductor and a ground conductor. The first signal conductor and the second signal conductor may comprise identical electromagnetic properties and may therefore be used interchangeably. The ground conductor may be arranged around the first signal conductor and the second signal conductor. Thus, the ground conductor may shield the first signal conductor and the second signal conductor from electromagnetic radiation from a surrounding of the first audio cable. Furthermore, the ground conductor may shield the first signal conductor and the second signal conductor from electromagnetic radiation from another audio cable, e.g. from crosstalk from the other audio cable. The first audio channel may further comprise a first signal inverter configured to invert an audio signal.

A balanced audio cable may enhance a signal-to-noise ratio of an audio signal transmitted by the balanced audio cable compared to a standard audio cable with only one signal conductor. A transmission signal may be transmitted by the first signal conductor and an inverted signal of the transmission signal may be transmitted by the second signal conductor. An external electromagnetic radiation may penetrate the ground conductor and may couple noise into the first signal conductor and the second signal conductor, essentially simultaneously. The external electromagnetic radiation may thus inflict a crosstalk signal within the first signal conductor and the second signal conductor. After being transmitted by the second signal conductor, the inverted signal of the transmission signal may be reinverted and may be combined with the transmission signal, which was transmitted by the first signal conductor. Thus, by inverting the transmission signal twice, an original polarization and phase of the transmission signal may be restored. On the other hand, the noise coupled into the second signal conductor may have been inverted only once, while the noise coupled into the first signal conductor has not been inverted. When being combined, the transmission signal transmitted by the first signal conductor may interfere constructively with the transmission signal transmitted by the second signal conductor, while the noise coupled into the first signal conductor may interfere destructively with the noise coupled into the second signal conductor. Thus, a strength of a noise in a combined audio signal may be reduced. In particular, a signal to noise ratio may thus be increased. It is noted, that the noise as described above may be a crosstalk signal. For example, the noise may be the first crosstalk signal and/or further external noise. Thus, the previously described may enable to reduce the strength of the first crosstalk signal.

As mentioned, the masking noise may comprise a level with sufficient height to render the first crosstalk signal incomprehensible or irrecoverable. If the first crosstalk signal is sufficiently strong, the masking noise may comprise a strength such that the masking noise may be audible during operation of the first audio channel. Thus, to restrain the masking noise from being audible during operation of the first audio channel while also maintaining a level of the masking noise with sufficient height to render the first crosstalk signal incomprehensible or irrecoverable, the strength of the first crosstalk signal may need to be reduced. Thus, if the first audio cable is a balanced cable, the crosstalk level of the first crosstalk signal may be reduced which may allow to introduce the masking noise to the first audio signal at a sufficiently high level while being irrecoverable in audio devices with a strong crosstalk coupling between individual cables.

The first signal conductor and the second signal conductor may be arranged as a twisted pair. In other words, the first signal conductor and the second signal conductor are arranged rotating around each other in a direction of signal transmission. In general, if two signal conductors are aligned parallel next to each other, a crosstalk coupling between the two signal conductors may be increased. Thus, arranging the first signal conductor and the second signal conductor as a twisted pair may decrease the strength of a crosstalk coupling between the first signal conductor and the second signal conductor. Furthermore, the first signal conductor and the second signal conductor may be more resistant to bending forces increasing the mechanical stability and longevity of the first audio cable.

The first audio channel may further comprise a second signal inverter. The second signal inverter may be configured to invert an audio signal that was transmitted by the second signal conductor. The first audio channel may further comprise a combiner. The combiner may be configured to combine an audio signal that was transmitted by the first signal conductor and an audio signal that was inverted by the second signal inverter. It is noted that the second signal inverter and the combiner may be part of a device connected to the first audio channel instead of being part of the first audio channel itself. In such a case, the first signal conductor and the second signal conductor may be inserted into individual sockets in the device connected to the first audio channel. For example, as already mentioned, the first audio channel may be connected to a speaker or a microphone. The speaker may comprise the second signal inverter and the combiner and perform the corresponding method steps of inverting a signal transmitted by the second signal conductor and combining a resulting inverted signal with a signal transmitted by the first signal conductor.

The first noise masker may be configured to introduce the masking noise into the first audio channel before the first and second signal conductor, that is before an input signal is e.g. split into a first and second transmission signal by a splitter. Alternatively, the first noise masker may be configured to introduce the masking noise into the first and second signal conductor, that is in particular before after an input signal is e.g. split into the first and second transmission signal. The first noise masker may be configured to introduce the masking noise into the first signal conductor and, before or after the first inverter, into the second signal conductor. Alternatively, the masking noise may be introduced between the first inverter and the second inverter into the second signal conductor. In another alternative the first noise masker may be configured to introduce the masking noise after the combiner. These options will be described in more detail below.

The masking noise may be white noise. Alternatively, the masking noise may be pink noise. Further alternatively, the masking noise may comprise a specific noise spectrum that may be optimized to render speech inaudible or irrecoverable. White noise may comprise a frequency spectrum with all audible frequencies essentially equally strong. Pink noise may be more commonly used as noise source when the noise source is supposed to be audible to people. Pink noise may comprise a frequency spectrum wherein the amplitude may be essentially inversely proportional to a corresponding frequency. Pink noise may be commonly concepted as audibly pleasant, in particular as more pleasant than white noise. Further, the specific noise spectrum that may be optimized to render speech inaudible or irrecoverable may relate to an average spectrum of human speech and/or to an average sensitivity spectrum of a human hearing system. For example, frequencies that may be more easily detectable by an average human hearing system may be increased in the specific noise spectrum.

The first audio channel may be connected to an output transducer and configured to transmit an audio signal to the output transducer. The output transducer may be a speaker, a buzzer or any other device configured to transform an electrical signal into an audible signal. In particular, the output transducer may be a speaker of a headset. The first audio channel may be connected to an input transducer and configured to transmit an audio signal from the input transducer. The input transducer may be a microphone or any other device configured to transform an audible signal into and electrical signal. Alternatively, the first audio channel may be connected to an AD converter, a computer or any other device configured to process an electrical signal.

One of the at least one second audio channel may comprise a second audio cable and a second noise masker for generating a second masking noise. The second noise masker may be configured to introduce the second masking noise into the second audio channel to mask a crosstalk level of a second crosstalk signal inflicted in the second audio channel by the first audio signal or one or more other of the at least one second audio signal. The one or more other of the at least one second audio channel may comprise all or some features of the first audio channel as previously described. In particular, the second masking noise may correspond or be identical to the first masking noise. For example, the first audio channel and the second audio channel may be essentially identical. Thus, it may be possible to appoint any of the first audio channel and the second audio channel as first audio channel rendering the remaining audio channel to be the second audio channel. Thus, each of the first audio channel and the second audio channel may have to suffice same conditions and/or requirements. One or more other of the at least one second audio channel may further comprise features as described above for the second audio channel.

One or more of the at least one second audio channel may each be connected to an output transducer and configured to transmit an audio signal to the output transducer. The output transducer may be a speaker, a buzzer or any other device configured to transform an electrical signal into an audible signal. In particular, the output transducer may be a speaker of a headset. One or more of the at least one second audio channel may each be connected to an input transducer and configured to transmit an audio signal from the input transducer. The input transducer may be a microphone or any other device configured to transform an audible signal into and electrical signal. Alternatively, the first audio channel may be connected to an AD converter, a computer or any other device configured to process an electrical signal.

For example, a headset may comprise a left speaker connected to a left audio channel and a right speaker connected to a right audio channel. The left audio channel and the right audio channel may be identical. Thus, either the left audio channel may correspond to the first audio channel and the right audio channel may correspond to the at least one second audio channel, or the left audio channel may correspond to the at least one second audio channel and the right audio channel may correspond to the first audio channel. Therefore, a signal transmitted by the right audio channel which may have been coupled into the left audio channel via crosstalk may not be audible in the left audio channel due to the masking noise in the left audio channel. Accordingly, a signal transmitted by the left audio channel which may have been coupled into the right audio channel via crosstalk may not be audible in the right audio channel due to the masking noise in the right audio channel.

As another example, a headset may comprise a left speaker connected to a left audio channel, a right speaker connected to a right audio channel and a microphone connected to a microphone audio channel. Each of the left audio channel, the right audio channel and the microphone audio channel may be the first audio channel according to the first aspect, while the other two may be one of the at least one second audio channel, as previously described. Therefore a signal transmitted by any of the left audio channel, the right audio channel or the microphone audio channel may not be audible in respective other audio channels.

The first audio channel and one or more of the at least one second audio channel may be arranged in a cable cord. The cable cord may further comprise a strengthening core, e.g. an aramid strengthening, to support the cable and avoid bending radii of the cable that may damage the first audio channel or the one or more of the at least one second audio channel. The first audio channel and the one or more of the at least one second audio channel may thereby be arranged as a twisting cord, e.g. by rotating around each other. This may, as previously described, reduce a strength of a crosstalk coupling between respective audio channels.

Said transmitting of an audio signal via an audio cable of a first audio channel may comprise splitting an input audio signal into a first transmission signal and a second transmission signal. Said transmitting of an audio signal via an audio cable of a first audio channel may further comprise transmitting the first transmission signal through a first signal conductor and the second transmission signal through a second signal conductor of the first audio channel. The second transmission signal may be inverted before transmission by a first signal inverter and inverted after transmission by a second signal inverter. Said transmitting of an audio signal via an audio cable of a first audio channel may further comprise generating an output audio signal by combining the first transmission signal and the second transmission signal. Thus, in other words, an audio signal may be transmitted via an audio cable of the first audio channel by splitting the audio signal into two transmission signals, wherein one of the two transmission signals is inverted before and after transmission and wherein the two transmission signals are recombined into an output audio signal after transmission. As previously described, external electromagnetic radiation may couple to the two transmission signals during transmission. The external electromagnetic radiation may couple to each of the two transmission signals essentially equally strong and with essentially identical polarization and phase. Thus, when one of the two transmission signals is inverted after transmission, the phase of the external electromagnetic radiation coupled into this one of the two transmission signals is inverted as well. Thus, the external electromagnetic radiation may interfere destructively when combined with itself and which may thus reduce the strength of the external electromagnetic radiation coupled to the audio signal. For example, the external electromagnetic radiation may be a radiation of a signal transmitted by a second audio channel, e.g. creating a crosstalk signal. Furthermore, said audio signal may be a silent signal, e.g. background noise or a signal with no detectable intensity. Thus, said audio signal may be present even when no signal is intended to be transmitted by the first audio channel.

Said generating of a masking noise may comprise generating a masking noise with a first noise masker to mask a crosstalk level of a first crosstalk signal inflicted in the first audio channel by one or more of at least one second audio signal. In other words, said generating of a masking noise may comprise generating a masking noise with a level of an average or maximum possible crosstalk level of the first crosstalk signal. Alternatively, said generating of a masking noise may comprise generating a masking noise with a level of at least a maximum possible crosstalk level up to a level ten times higher than a maximum possible crosstalk level, in particular up to six times higher than a maximum possible crosstalk level, in particular three times as high as a maximum possible crosstalk level, of the first crosstalk signal. In particular, the masking noise may be generated with a level such that when introducing the masking noise into the first audio channel, the first crosstalk signal may not be audible or comprehensible. It is noted that the crosstalk level of the first crosstalk signal may differ from a crosstalk level of a crosstalk signal inflicted in a first signal conductor and/or a second signal conductor of the first audio channel, by one or more of at least one second audio signal. Therefore, if the first audio cable is a balanced cable, the crosstalk level of the first crosstalk signal may correspond to a level of a crosstalk signal in the output audio signal. As described above, the level of a crosstalk signal in the output audio signal may be lower than a level of a corresponding crosstalk signal in the first signal conductor and/or the second signal conductor.

Said introducing of the masking noise may comprise introducing the masking noise into the first audio channel before splitting the input signal or after generating the output signal by combining the first transmission signal and the second audio transmission signal. As previously mentioned, introducing the masking noise into the first audio channel may render the first crosstalk signal to be not audible or not comprehensible. It may be desirable that the first crosstalk signal is not audible or not comprehensible when the audio signal may be transferred to another device. Thus, the method step of introducing the masking noise may be performed at any step of the process of transmitting the audio signal before transferring the audio signal to another device. In general, this may include introducing the masking noise after generating the output signal by combining the first transmission signal and the second audio transmission signal, as an alternative.

Introducing of a masking noise into an audio cable may thereby comprise superposition of the masking noise and an audio signal transmitted within the corresponding audio cable. Alternatively, it may comprise inserting the masking noise as audio signal, e.g. if there is no audio signal that is transmitted by the corresponding audio cable. In particular, an audio signal transmitted by the corresponding audio cable may not be altered by introducing the masking noise apart from adding the masking noise to the audio signal.

Alternatively, said introducing of the masking noise may comprise introducing the masking noise into a first signal conductor. Alternatively or additionally, said introducing of the masking noise may comprise introducing the masking noise into a second signal conductor before inverting the second transmission signal with the first signal inverter. Alternatively or additionally, said introducing of the masking noise may comprise introducing the masking noise into the second signal conductor after inverting the second transmission signal with the second signal inverter. Thus, by introducing the masking noise before inverting the second transmission signal with the first signal inverter, effectively a similar effect may be achieved as when introducing the masking noise into the first audio channel before splitting the audio channel. Analogously, by introducing the masking noise after inverting the second transmission signal with the second signal inverter a similar effect may be achieved as when introducing the masking noise after generating the output signal by combining the first transmission signal and the second transmission signal. Thus, the present method steps may present an alternative to the method steps described above.

Said generating of a masking noise may comprise generating a masking noise with a first noise masker to mask a crosstalk level of a crosstalk signal inflicted in a first signal conductor and/or a second signal conductor of the first audio channel, by one or more of at least one second audio signal. In other words, said generating of a masking noise may comprise generating a masking noise with a level of an average or maximum possible crosstalk level of a crosstalk signal inflicted in the first signal conductor and/or the second signal conductor of the first audio channel by one or more of at least one second audio signal. Alternatively, said generating of a masking noise may comprise generating a masking noise with a level of at least a maximum possible crosstalk level up to a level ten times higher than a maximum possible crosstalk level, in particular up to six times higher than a maximum possible crosstalk level, in particular three times as high as a maximum possible crosstalk level, of a crosstalk signal inflicted in the first signal conductor and/or the second signal conductor of the first audio channel by one or more of at least one second audio signal. In particular, the masking noise may be generated with a level that when superimposing the masking noise and the audio signal, the crosstalk signal inflicted in the first signal conductor and/or the second signal conductor of the first audio channel by one or more of at least one second audio signal may not be audible or comprehensible, even if a strength of a resulting combined signal is enhanced.

Said introducing of the masking noise may additionally or alternatively comprise introducing the masking noise into the second signal conductor in between inverting the second transmission signal with the first signal inverter and inverting the second transmission signal with the second signal inverter. If the mentioned method step is used as alternative to the previously mentioned method steps for introducing the masking noise, the intensity of the masking noise may be chosen identically as for previous embodiments. In the following, an exemplary embodiment will be discussed where the masking noise is introduced both into the first signal conductor and into the second signal conductor in between inverting the second transmission signal with the first signal inverter and inverting the second transmission signal with the second signal inverter. By introducing the masking noise into the second signal conductor in between inverting the second transmission signal with the first signal inverter and inverting the second transmission signal with the second signal inverter, the masking noise may be inverted once by the second signal inverter before the first transmission signal and the second transmission signal are combined. Thus, when generating an output audio signal by combining the first transmission signal and the second transmission signal, the masking noise introduced into the first signal conductor and the masking noise introduced into the second signal conductor may have opposite polarity and may thus interfere destructively. This may reduce the strength of the masking noise in the output signal in a similar way as the strength of a crosstalk signal is reduced as described before. Thus, in the output signal the strength of the masking noise may suffice the previously described conditions such that a remaining crosstalk signal may be inaudible or irrecoverable.

Thus, the present disclosure in particular allows for a masking device which prevents crosstalk in headsets from being audible, combined with symmetrical balanced cabling to L/R speaker in the headset. The present disclosure allows to avoid that an unsecure line can hear what is transmitted in the secure line. The separation may in particular be >90 dB. While this is difficult to obtain with normal electric amplifiers and cabling, the present disclosure allows to achieve such requirements. Thus, according to certain aspects, it is advantageous to add a noise generator and to use symmetrical, balanced cabling to the L/R speakers of the headset. Said noise generator provides white or pink noise at an adjustable level. Said noise generator level may be adjusted so it is similar to the native cross talk level. Therefore, it is impossible to record the secure channel and enhance the signal so the secure communication is audible. To keep the noise level below the audible level, it may be necessary to use balanced symmetrical cabling for L/R speakers in the headset.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
- Fig. 1: illustrates a schematic diagram of an example of an audio device with three audio channels;
- Fig. 2a-f: illustrate schematic diagrams of alternative crosstalk masking methods for an audio channel of an exemplary audio device.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The audio signal may be or comprise an electrical signal, electromagnetic waves, an encoded (digital) signal, a speech signal, an unencoded signal or a signal with digital frequency or amplitude modulation. In particular, the audio signal may not be a desired signal, such as background noise or even a flat or silent or inaudible signal e.g. when the audio device lacks an input or is not in operation.

The masking noise may be white noise (equal power within any interval of frequencies), pink noise, red noise or blue noise or any other color of noise. In particular, the noise may comprise a specifically engineered spectrum adapted to average or specific speech spectra and hearing sensitivity spectra. Therefore, a masking noise may be designed to have a higher intensity in frequencies that are dominant in human speech and that can be heard especially easy be the human hearing system.

The input transducer and/or the output transducer may be a computer, an AD-converter, a recording means, or any other component that may enable the registration or the generation of an audio signal.

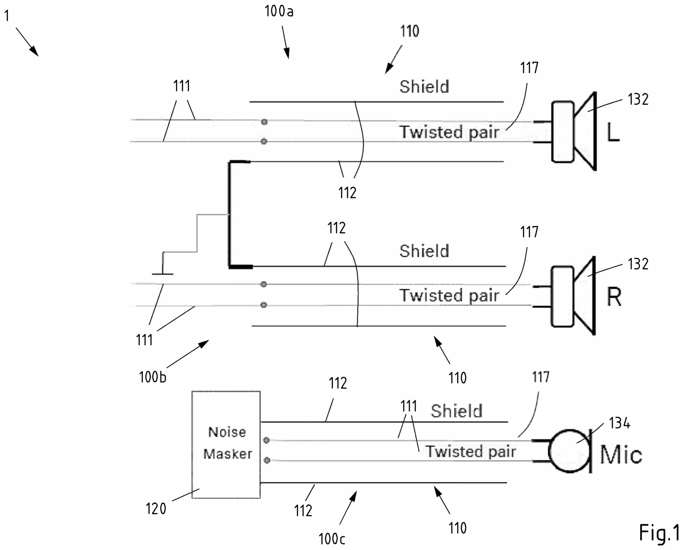

Now referring to Fig. 1 illustrating a schematic diagram of an exemplary audio device 1 with three audio channels 100a-c. The shown audio device 1 could be, for example, a headset with a microphone. The left audio channel 100a, the right audio channel 100b and the microphone audio channel 100c each comprise an audio cable 110. Each of the audio cables 110 is connected to an output transducer 132 (e.g. an on-ear headset speaker) or an input transducer 134 (e.g. a microphone). Thus, an audio signal may be transmitted to one of the output transducers 132 the respective audio cable 110. The input transducer 134 may generate an audio signal that is transmitted by the audio cable 110.

The audio channels 100a, 100b comprise two signal conductors 111 each. The two signal conductors 111 are arranged as a twisted pair 117 to reduce an internal crosstalk between the two signal conductors 111 and to increase physical stability (they are shown as parallel due to graphical limitations). The microphone audio channel 100c is shown with only one signal conductor 111 but could as well comprise two signal conductors as shown for the audio channels 100a, 100b. The ground conductors 112 are electrically connected to a ground and surround the signal conductors 111 to isolate the signal conductors 111 from external electromagnetic radiation but also to reduce an outward radiation of a signal transmitted by the signal conductors 111. The ground conductors 112 therefore reduce crosstalk and noise induced in each of the audio channels by audio signal transmitted in the respective other audio channels and/or other electromagnetic radiation from external sources.

While a part of the intensity of the electromagnetic radiation will be reflected or absorbed by the ground conductors and other disturbances in the surroundings, a part of its remaining intensity can couple into an audio cable 110. The signal that is thus inflicted in the audio cable 110 can propagate withing the audio cable 110 as crosstalk signal. Therefore, an audio signal transmitted by one of the audio channels 100a, 100b may induce a crosstalk audio signal in the microphone channel 100c. Thus, if one of the audio channels 100a, 100b transmits an audio signal comprising (confidential) information, the crosstalk signal in the microphone audio channel 100c may contain the (confidential) information carried by the audio signal. Therefore, it would be possible to record or read the (confidential) information of the audio signal transmitted one of the audio channels 100a, 100b in the microphone audio channel 100c. This access to the (confidential) information can be undesirable. It is noted that this principle may also apply the other way around or in between the left and right audio channels respectively. Thus, an audio signal transmitted by the microphone audio channel 100c may induce a crosstalk signal in one or both of the audio channels 100a, 100b. Further, audio signals transmitted by the audio channels 100a, 100b may induce corresponding crosstalk signals in the corresponding other audio channel.

In order to prevent unwanted access to the (confidential) information transmitted by one of the audio channels 100a, 100b via the microphone audio channel 100c, the microphone audio channel comprises a noise masker 120. The noise masker 120 can introduce a masking noise into the microphone audio channel with an intensity high enough to cover the crosstalk signal. Due to the principle of superposition, the masking noise and the crosstalk signal will add up to a combined signal. Thus, if the intensity of the masking noise is high enough, the crosstalk signal will be covered by the masking noise and it may not be possible to regain the crosstalk signal. Again, also the left audio channel 100a and/or the right audio channel 100b could comprise a noise masker 120 to prevent access to a crosstalk signal via the corresponding audio channel. The position of the noise masker 120 is only indicated schematically in Fig. 1 without intending any limitation and can in particular be located on either side of the audio cable 110 or generally integrated in one or multiple different positions.

When the crosstalk signal is strong, the intensity of the masking noise may have to be so strong that the masking noise is audible for a user. It is desirable that no noise is audible during operation of the audio device to ensure high audio quality. To maintain a high audio quality, the strength of the crosstalk signal thus has to be reduced. By reducing the strength of the crosstalk signal, the masking noise may be generated with a lower intensity while still being able to cover the crosstalk signal. By using a symmetrical audio cable as audio cable 110, a crosstalk signal coupled into the audio cable 110 may be reduced in intensity. Such a symmetrical audio cable is shown for the audio channels 100a, 100b in Fig. 1 as comprising two signal conductors 111.

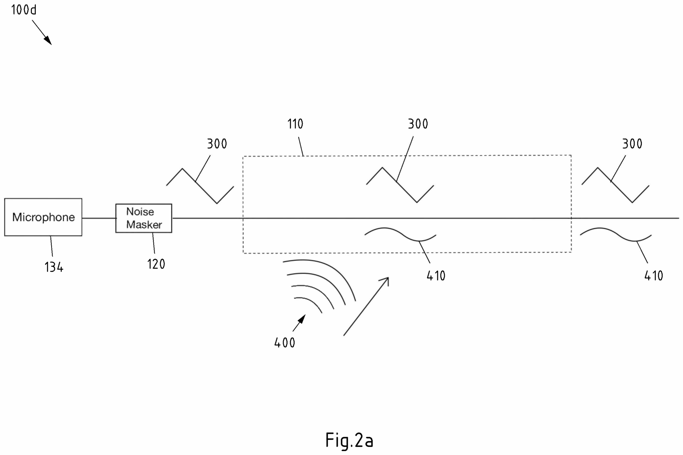

Further, (not shown in Fig. 1 but illustrated in Figs. 2a-f) a respective audio channel 100a-i comprising a symmetrical cable comprises two inverters at each end of one of the two signal conductors 111. If an audio signal is transmitted by the audio channel, the audio signal is split up by a splitter (also not shown in Fig. 1) and transmitted by the two signal conductors 111. Thereby, if the two inverters 113, 114 are connected to one of the two signal conductors 111, the signal transmitted by this signal conductor 111 is transmitted as inverted signal. Before combining the two audio signals transmitted by the signal conductors 111, the inverted signal is inverted once more, thus regaining the original phase and polarity. When being combined, the two signals thus interfere constructively.

On the other hand, a crosstalk signal would be coupled into the two signal conductors 111 mainly in between the two inverters. Therefore, the phase and polarity of the two crosstalk signals is identical until the crosstalk signal is inverted by the second inverter 114 coupled to one of the signal conductors 111. Thus, when being combined the two crosstalk signals have opposing polarity and thus interfere destructively. This reduces the intensity of a resulting combined crosstalk signal. Using a symmetrical cable as audio cable 110 therefore reduces the intensity of the crosstalk signal inflicted in the corresponding audio channel 100a-i by one or more of the other audio channels 100a-i. This, in turn, allows to reduce the intensity of the masking noise while still maintaining a sufficient masking of the crosstalk signal.

Further, as shown in Fig. 1, the right audio channel 100b is structurally identical to the left audio channel 100a. Thus, the left audio channel 100a and the right audio channel 100b may be essentially interchangeable. In particular, in the present embodiment, the left audio channel 100a and the right audio channel 100b comprise identical components and are identically configured to perform a crosstalk masking method according to the second aspect of the disclosure or as described above. Through such a composition of components, the left audio channel 100a, the right audio channel 100b and the microphone audio channel 100c are completely decoupled from each other in the sense that an audio signal transmitted by one of the audio channel 100a-i is irrecoverable and/or incomprehensible in the other audio channels 100a-i.

Further exemplary embodiments may contain only one audio channel that is configured to mask a respective crosstalk signal as described above, while one or more other audio channels may comprise a standard audio cable with or without a noise masker.

In a different exemplary embodiment, the audio channels 100a, 100b may comprise a noise masker (and a symmetrical cable) and/or the microphone audio channel 100c may comprise a simple audio cable and/or no noise masker. Audio devices of further exemplary embodiments may comprise further audio channels with or without noise maskers, as each audio channel may be configured individually to render crosstalk from other audio channels irrecoverable and/or incomprehensible.

In particular, any of the shown audio channels 100a-c of Fig. 1 may essentially correspond to any of the embodiments shown in Figs. 2a-f.

Figs. 2a-f illustrate schematic diagrams of alternative crosstalk masking methods for an audio channel of an exemplary audio device. Illustrated in Figs. 2a-f are crosstalk masking methods according to the second aspect. In Fig. 2a the audio channel 100d comprises a microphone 134 that generates an audio signal. The audio signal is processed by the noise masker 120 which introduces a noise signal 300 to the audio signal. Along propagation, a crosstalk radiation 400 can couple a crosstalk signal 410 into the audio channel 100d along the section corresponding to the audio cable 110. The size of the masking noise 300 is schematically chosen to be larger than the crosstalk signal 410 which is supposed to show that the intensity of the masking noise 300 is larger than the intensity of the crosstalk signal 410. The intensity of the masking noise 300 may nevertheless be similar to or even lower than the intensity of the crosstalk signal 410, as long as the combined signal renders the crosstalk signal 410 incomprehensible and/or irrecoverable.

Both the masking noise 300 and the crosstalk signal 410 propagate to the right end of Fig. 2a where the audio signal may be further processed. Alternatively, the audio channel 100d may not comprise a microphone 134 but instead an output transducer 132 at the right end of the figure. In an exemplary embodiment, the audio signal is a flat or inaudible signal or the audio signal is no actual audio signal but rather background noise. In particular, the existence of the audio signal may not be relevant for the masking of the crosstalk signal as the crosstalk radiation 400 may couple the crosstalk signal 410 into the audio channel 100d even if no audio signal is transmitted by the audio channel 100d at that point in time. The audio signal may therefore act as theoretical medium to clarify the coupling of the crosstalk radiation 400 and the introduction of the masking noise 300.

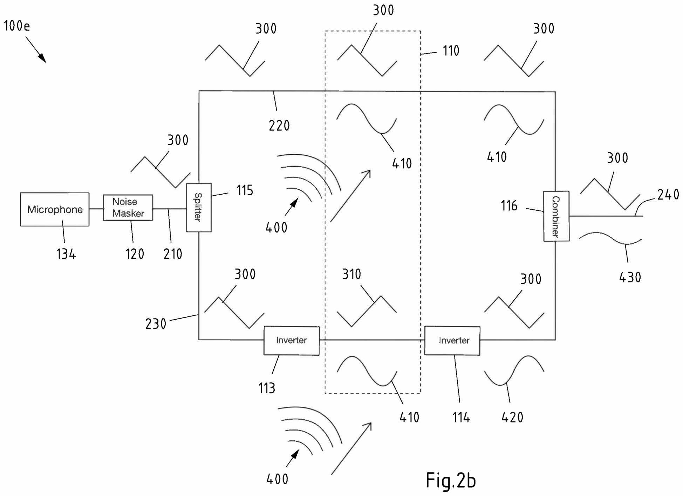

Turning now to Figs. 2b-f illustrating schematic diagrams of five alternative crosstalk masking methods for exemplary audio channels 100e-i, e.g. comprising a symmetrical audio cable as discussed with respect to Fig. 1. Some components or features are realized in all of the Figs. 2b-f. These will be discussed first for all of Figs. 2b-f, followed by a discussion of the differences between the masking methods of Figs. 2b-f.

An input signal 210 is split up into a first transmission signal 220 and a second transmission signal 230 by the splitter 115. The two transmission signals 220, 230 are then transmitted through the section corresponding to the audio cable 110. The combiner 116 then combines the two transmission signals 220, 230 to the output audio signal 240. As discussed above for Fig. 2a, the input audio signal 210 may be a flat or inaudible signal or background noise. Therefore, also the two transmission signals 220, 230 and the output audio signal 240 may be a flat or inaudible signal or background noise. The second transmission signal 230 is processed by a first inverter 113 and a second inverter 114, each inverting the second transmission signal 230 by e.g. inverting the polarity of the second transmission signal 230. The first inverter 113 and the second inverter 114 are thereby placed on opposite sides of the audio cable 110.

A crosstalk radiation 400 can couple to both transmission signals 220, 230 simultaneously in the audio cable region 110, inflicting a crosstalk signal 410 in each of the two transmission signals 220, 230. The crosstalk signal inflicted in the second transmission signal 230 is inflicted mostly in between the first inverter 113 and the second inverter 114 as the audio cable 110 is arranged between the first inverter 113 and the second inverter 114. Thus, when propagating towards the combiner 116, the second inverter 114 inverts the crosstalk signal inflicted in the second transmission signal 230 into an inverted crosstalk signal 420. The inverted crosstalk signal 420 and the crosstalk signal 410 inflicted in the first transmission signal 220 interfere destructively when combined by the combiner 116. Due to this, the intensity of the reduced crosstalk signal 430 in the output audio signal is (much) lower than the intensity of the crosstalk signal 410 or the inverted crosstalk signal 420. It is noted that the distance between the different components (e.g. splitter and inverter) is not to scale and merely for ordering the different method steps. In particular, as mentioned, a distance between the first inverter 113 and the second inverter 114 may be much larger than a distance between the splitter 115 and the first inverter 113.

The exemplary audio channels 100e-i shown in Figs. 2b-f differ from each other by the arrangement of the noise maskers 120 and the respective masking noises 300-340. In Fig. 2b the noise masker 120 is configured to introduce the masking noise 300 into the input audio signal 210. The masking noise 300 is split up by the splitter 115 into a masking noise propagating with the first transmission signal 220 and a masking noise propagating with the second transmission signal 230. The masking noise propagating with the second transmission signal 230 is inverted by the first inverter 113 into the inverted masking noise 310 before being reinverted into the original masking noise 300 by the second inverter 114 after propagation through the audio cable 110. Thus, when the combiner 116 combines the two masking noises they interfere constructively.

Due to the constructive interference the intensity of the masking noise in the output signal 240 is approximately the same as the intensity of the masking noise in the input audio signal 210 (before splitting). The intensity of the masking noise 300 when generated by the noise masker 120 may therefore be comparable to (e.g. essentially same as or up to ten times stronger than) the reduced crosstalk signal 430 of the output signal. Thus, as the intensity of the reduced crosstalk signal 430 is ideally much smaller than the intensity of the crosstalk signal 410, the crosstalk signal 410 may be much stronger than the masking noise 300 during propagation with the first transmission signal 220 or the second transmission signal 230. For completeness' sake it shall be mentioned that the size of the individual masking noises 300 is not for scale but merely meant for comparison with the corresponding crosstalk signal. While the intensities of the individual signals approximately add up due to constructive interference, destructive interference significantly decreases the intensity of the resulting signal.

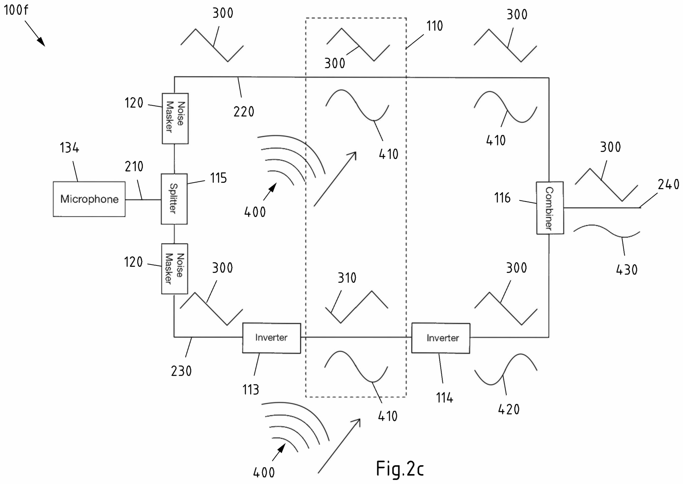

Turning now to Fig. 2c illustrating a further alternative to the exemplary methods shown in Figs. 2b, 4c. In the audio channel 100f two noise maskers 120 are arranged in between the splitter 115 and the combiner 116. The noise maskers 120 are arranged to introduce a masking noise 300 into the first transmission signal 220 and into the second transmission signal 230 before the first inverter 113. Thus, the masking noise 300 introduced into the second transmission signal 230 is inverted by the first inverter 113 resulting in the inverted masking noise 310 which is then in turn inverted by the second inverter 114 resulting in the original masking noise 300. When being combined by the combiner 116, the two masking noise signals thus interfere constructively as described in Fig. 2b.

The two noise maskers 120 may thereby be a single noise masker configured to split a single generated noise signal into two identical masking noise signals. Furthermore, the masking noise 300 as introduced by the noise maskers 120 may be approximately half as strong as the masking noise 300 described in Fig. 2b to end up at the same intensity as the masking noise 300 described in Fig. 2b after being combined by the combiner 116. In an exemplary embodiment the audio channel 100f comprises only one noise masker 120. In particular, the audio channel 100f may comprise only one noise masker 120 arranged in between the splitter 115 and the combiner 116. In this case, the masking noise 300 will only be transmitted by one of the first transmission signal 220 and the second transmission signal 230 and will transmit into the output audio signal 240 through the combiner 116. In this exemplary embodiment the noise masker may have features or characteristics according to the noise maskers 120 from Figs. 2a, b.

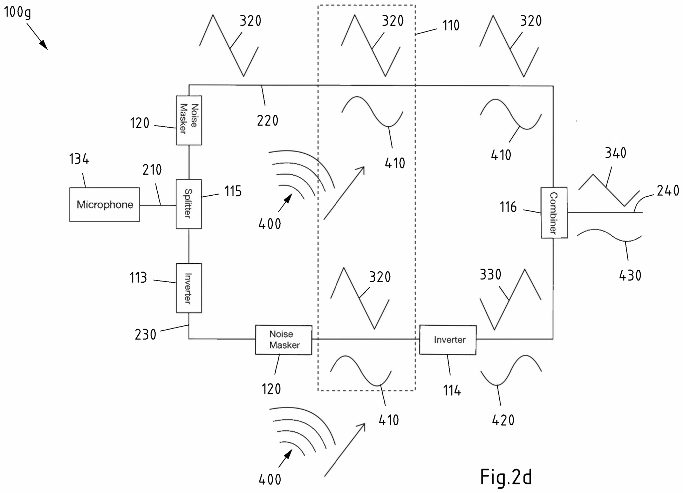

In Fig. 2d the exemplary audio channel 100g comprises two noise maskers 120. The noise maskers 120 are arranged to introduce a masking noise 320 into the first transmission signal 220 and the second transmission signal 230, respectively. Thereby, one of the two noise maskers 120 is arranged to introduce a masking noise 320 into the second transmission signal 230 in between the first inverter 113 and the second inverter 114. In Fig. 2d, the noise masker 120 is shown on the left of the audio cable 110, but the noise masker 120 may as well be arranged on the right side of the audio cable 110. Because the noise masker 120 is arranged in between the first inverter 113 and the second inverter 114, the masking noise 230 introduced into the second transmission signal is only inverted once by the second inverter 114 and not by the first inverter 113. Thus, the combiner 116 combines the masking noise 320 transmitted via the first transmission signal 220 and the inverted masking noise 330 which has the opposite polarity of the masking noise 320.

Through destructive interference (due to the opposite polarity and/or phase) the combined masking noise is reduced in intensity. Since the reduced masking noise 340 has to comprise an intensity high enough to mask the reduced crosstalk signal 430 in the output signal 240, the noise maskers 120 have to introduce masking noise 320 with a higher intensity compared to the masking noise 300 of the other embodiments shown in Figs. 2a-f to compensate for the loss of intensity due to destructive interference. Furthermore, it may be difficult to obtain a constant and reproducible intensity of the reduced masking noise 340 because the destructive interference may vary in how strongly the intensity is reduced depending on fluctuations of phase and intensity of the masking noise 320 and the inverted masking noise 330. Thus, to maintain a sufficiently high intensity of the reduced masking noise 340 at least most of the time, an average intensity of the reduced masking noise 340 may have to be higher than the masking noise 300 in the output signals 240 of the embodiments described in the other embodiments of Figs. 2a-f.

As discussed with regards to Fig. 2c, the audio channel 100g may only comprise one noise masker. This can e.g. help in obtaining a more consistent destructive interference. In this case, the masking noise 320 will only be transmitted with the first transmission signal 220 or with the second transmission signal 230 and will be transmitted into the output audio signal 240 through combiner 116. In this exemplary embodiment the noise masker may have features or characteristics according to the noise maskers 120 from Figs. 2a-c. In particular, the masking noise 320 may comprise characteristics of the masking noise 300 of Figs. 2a-c.

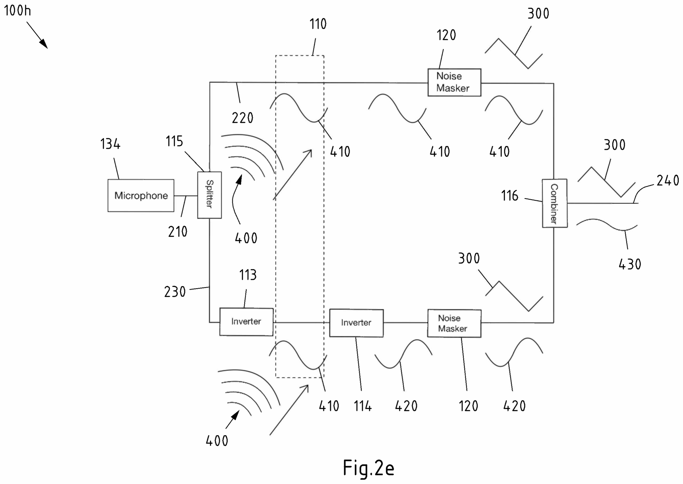

Fig. 2e shows another alternative that works analogously to the method discussed in Fig. 2c. As shown in Fig. 2e, the noise maskers 120, 120 are arranged to introduce masking noise into the first transmission signal 220 and the second transmission signal 230, respectively. Differing from Fig. 2d, the noise masker 120 is arranged to introduce a masking noise into the second transmission signal 220 after the second inverter 114 inverted the crosstalk signal 410 and/or the second transmission signal 220. All further features of this exemplary embodiment may be identical as discussed with respect to Fig. 2c. In an exemplary embodiment the audio channel 100h comprises only one of the noise maskers 120. In this case, the masking noise 300 will only be transmitted with the respective transmission signal 220 or 230 and will transmit into the output audio signal 240 through the combiner 116. In this exemplary embodiment the noise masker may have features or characteristics according to the noise maskers 120 from Figs. 2a-c.

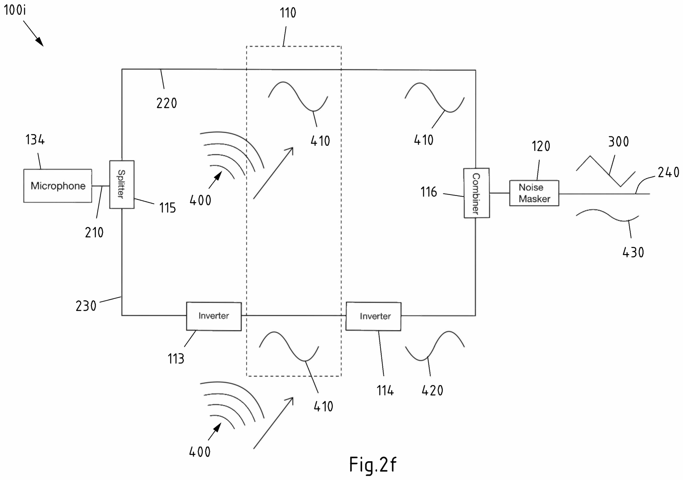

The arrangement of the audio channel 100i shown in Fig. 2f differs only slightly from the exemplary embodiment shown in Fig. 2b. The noise masker 120 is hereby arranged after the combiner 116. Thus, the noise masker 120 introduces the masking noise 300 directly to the output audio signal 240. Thus, no splitting or inverting of the masking noise 300 is required and the intensity of the masking noise 300 may be comparable to (e.g. essentially same as or up to ten times stronger than) the reduced crosstalk signal 430 of the output signal. This may be the preferred embodiment.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects. Reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

### LIST OF REFERENCE SIGNS:

- Audio device: 1
- Audio channel: 100a-i
- Audio cable: 110
- Signal conductor: 111
- Ground conductor: 112
- First inverter: 113
- Second inverter: 114
- Splitter: 115
- Combiner: 116
- Twisted Pair: 117
- Noise masker: 120
- Output transducer: 132
- Input transducer: 134
- Input audio signal: 210
- First transmission signal: 220
- Second transmission signal: 230
- Output audio signal: 240
- Masking noise: 300
- Inverted masking noise: 310
- Masking noise with a higher intensity: 320
- Inverted masking noise with higher intensity: 330
- Reduced masking noise: 340
- Crosstalk radiation: 400
- Crosstalk signal: 410
- Inverted crosstalk signal: 420
- Reduced crosstalk signal: 430

## Claims

1. An audio device (1) comprising:
- a first audio channel (100a-i) configured to transmit a first audio signal; and
- at least one second audio channel (100a-i) configured to transmit at least one second audio signal,
wherein the first audio channel (100a-i) comprises a first audio cable (110) and a first noise masker (120) for generating a masking noise (300) and wherein the first noise masker (120) is configured to introduce the masking noise (300) into the first audio channel (100a-i) to mask a crosstalk level of a first crosstalk signal (410) inflicted in the first audio channel (100a-i) by one or more of the at least one second audio signal.

2. The audio device (1) according to claim 1, wherein the audio device (1) is a headset.

3. The audio device (1) according to any of claims 1 or 2, wherein the first audio cable (110) is a balanced audio cable comprising a first signal conductor (111), a second signal conductor (111) and a ground conductor (112) and wherein the first audio channel (100a-i) further comprises a first signal inverter (113) configured to invert an audio signal.

4. The audio device (1) according to claim 3, wherein the first signal conductor (111) and the second signal conductor (111) are arranged as a twisted pair (117).

5. The audio device (1) according to any of claims 3 or 4, wherein the first audio channel (100a-i) further comprises:
- a second signal inverter (114) configured to invert an audio signal (230) that was transmitted by the second signal conductor (111); and
- a combiner (116) configured to combine an audio signal (220) that was transmitted by the first signal conductor and an audio signal (230) that was inverted by the second signal inverter (114).

6. The audio device (1) according to claim 5, wherein the first noise masker (120) is configured to introduce the masking noise (300) into the first audio channel:
- before the first and second signal conductor (111);
- into the first and second signal conductor (111);
- into the first signal conductor (111) and, before the first inverter (113), into the second signal conductor (111);
- into the first signal conductor (111) and, after the second inverter (114), into the second signal conductor (111);
- into the first signal conductor (111) and, between the first inverter (113) and the second inverter (114), into the second signal conductor (111); and/or
- after the combiner (116).

7. The audio device (1) according to any of claims 1 to 6, wherein the masking noise (300) is white noise, pink noise or comprises a specific noise spectrum that is optimized to render speech irrecoverable.

8. The audio device (1) according to any of claims 1 to 7, wherein the first audio channel (100a-i) is connected to an output transducer (132) and configured to transmit an audio signal to the output transducer (132) or connected to an input transducer (134) and configured to transmit an audio signal from the input transducer (134).

9. The audio device (1) according to any of claims 1 to 8, wherein one of the at least one second audio channel (100a-i) comprises a second audio cable (110) and a second noise masker (120) for generating a second masking noise (300), wherein the second noise masker (120) is configured to introduce the second masking noise (300) into the second audio channel (100a-i) to mask a crosstalk level of a second crosstalk signal (410) inflicted in the second audio channel (100a-i) by the first audio signal or one or more other of the at least one second audio signal.

10. The audio device (1) according to any of claims 1 to 9, wherein one or more of the at least one second audio channel (100a-i) each is connected to an output transducer (132) and configured to transmit an audio signal to the output transducer (132) or connected to an input transducer (134) and configured to transmit an audio signal from the input transducer (134).

11. The audio device (1) according to any of claims 1 to 10, wherein the first audio cable (110) and the second audio cable (110) are arranged in a cable cord.

12. A crosstalk masking method, in particular being performed by an audio device (1) according to any of claims 1 to 11, the method comprising:
- generating a masking noise (300) with a first noise masker (120) to mask a crosstalk level of a first crosstalk signal (410) inflicted in a first audio channel (100a-i) by one or more of at least one second audio signal; and
- introducing the masking noise (300) into the first audio channel (100a-i) configured to transmit a first audio signal.

13. The crosstalk masking method according to claim 12, further comprising
- transmitting of an audio signal via an audio cable (110) of the first audio channel (100a-i), said transmitting comprising:
- splitting an input audio signal (210) into a first transmission signal (220) and a second transmission signal (230);
- transmitting the first transmission signal (220) through a first signal conductor (111) and the second transmission signal (220) through a second signal conductor (111) of the first audio channel (100a-i), wherein the second transmission signal (230) is inverted by a first signal inverter (113) before transmission and is inverted by a second signal inverter (114) after transmission; and
- generating an output audio signal (240) by combining the first transmission signal (220) and the second transmission signal (230) with a combiner (116).

14. The crosstalk masking method according to claim 13, wherein said introducing of the masking noise (300) comprises one or more of:
- introducing the masking noise (300) into the first audio channel (100a-i) before splitting the input signal (210) or after generating the output signal (240) by combining the first transmission signal (220) and the second transmission signal (230);
- introducing the masking noise (300) into the first signal conductor (111) and introducing the masking noise (300) into the second signal conductor (111) before inverting the second transmission signal (230) with the first signal inverter (113) or after inverting the second transmission signal (230) with the second signal inverter (114);
- introducing the masking noise (300) into the first signal conductor (111) and introducing the masking noise (300) into the second signal conductor (111) in between inverting the second transmission signal (230) with the first signal inverter (113) and inverting the second transmission signal (230) with the second signal inverter (114).
